# EUROPÄISCHE PATENTSCHRIFT

(11) **EP 3 028 795 B1**
(45) Veröffentlichungstag und Bekanntmachung des Hinweises auf die Patenterteilung: **14.06.2017**
(21) Anmeldenummer: 15193354.6
(22) Anmeldetag: 06.11.2015
(51) Int. Cl.: B23B 31/26, F16F 1/366

(54) **SPANNVORRICHTUNG**
CLAMPING DEVICE
DISPOSITIF DE SERRAGE

(30) Priorität: 01.12.2014 DE 102014117571
(43) Veröffentlichungstag der Anmeldung: 08.06.2016
(73) Patentinhaber: Ott-Jakob Spanntechnik GmbH, 87663 Lengenwang (DE)
(72) Erfinder: Greif, Josef, 87496 Friesenried (DE); Mohr, Peter, 87487 Wiggensbach (DE); Reisacher jun., Bartholomäus, 86807 Buchloe (DE)
(74) Vertreter: Charrier Rapp & Liebau

(56) Entgegenhaltungen:
- EP-A1- 1 927 418
- EP-B1- 1 476 274
- WO-A1-85/00141
- WO-A1-2014/161791
- DE-A1-102008 057 463

## Beschreibung

Die Erfindung betrifft eine Spannvorrichtung zum Spannen eines Werkstücks oder eines Werkzeugs bzw. einer Werkzeugaufnahme an einem Maschinenteil einer Werkzeugmaschine nach dem Oberbegriff des Anspruchs 1. Die Erfindung betrifft außerdem eine Bearbeitungseinheit einer Werkzeugmaschine mit einer derartigen Spannvorrichtung.

Werkzeugmaschinen oder Bearbeitungszentren weisen in der Regel eine in deren Arbeitsspindel integrierte Spannvorrichtung zum automatischen Spannen und Lösen von Bearbeitungswerkzeugen auf Bei den bekannten Spannvorrichtungen werden die Bearbeitungswerkzeuge durch einen in der Arbeitsspindel angeordneten Spannsatz gehalten, der am vorderen Ende einer durch eine Federanordnung vorgespannten Zugstange angeordnet ist. Der Spannsatz enthält üblicherweise mehrere radial bewegliche Zangenelemente, durch welche das Bearbeitungswerkzeug in die Arbeitsspindel eingezogen wird. Zum Lösen der Bearbeitungswerkzeuge wird die Zugstange durch eine so genannte Löseeinheit entgegen der Kraft der Federanordnung verschoben, so dass der Spannsatz mit den Zangenelementen geöffnet wird und das Bearbeitungswerkzeug freigibt.

Aus der DE 10 2004 051 031 B3 ist eine derartige Spannvorrichtung bekannt. Bei dieser Spannvorrichtung ist die Federanordnung als Tellerfederpaket mit einer Vielzahl aneinandergereihter Tellerfedern ausgeführt. Derartige Tellerfederpakete weisen jedoch eine relativ große Masse und aufgrund ihrer hohen Belastung auch nur eine begrenzte Lebensdauer auf. Außerdem ist die Montage solcher Tellerfederpakete mit einem relativ großen Aufwand verbunden.

In der DE 40 15 261 A1 ist eine Vorrichtung zum Erzeugen einer Spannbewegung und einer Spannkraft für die Betätigung eines Spannmittels an einer durch einen Spindelmotor drehbaren Arbeitsspindel einer Werkzeugmaschine offenbart. Die Vorrichtung enthält zur axialen Verschiebung eines Zug-/Druckrohres einen Schraubantrieb mit einem Abstützring der zur Sicherung gegen Verdrehung mit einem Federspeicher verbunden ist. Dieser Federspeicher, der bei axialer Einfederung auch ein Drehmoment auf die Arbeitsspindel übertragen kann, besteht aus einem Federelement und einem Bewegungs-Wandlungsgetriebe, wobei das Federelement einen Wickelkörper aus einem Faserverbundwerkstoff umfasst.

Aufgabe der Erfindung ist, eine Spannvorrichtung und eine Bearbeitungseinheit mit einer derartigen Spannvorrichtung zu schaffen, bei denen die zur Erzeugung der Spann- oder Einzugskraft verwendete Federanordnung leicht und einfach montierbar ist.

Diese Aufgabe wird durch eine Spannvorrichtung mit den Merkmalen des Anspruchs 1 und durch eine Bearbeitungseinheit mit den Merkmalen des Anspruchs 9 gelöst. Zweckmäßige Weiterbildungen und vorteilhafte Ausgestaltungen der Erfindung sind in den Unteransprüchen angegeben.

Bei der erfindungsgemäßen Spannvorrichtung weist die zur Erzeugung der Spann- bzw. Einzugskraft des Spannsatzes verwendete Federanordnung mehrere aus einem Faserverbundwerkstoff bestehende Federelemente auf. Es wird dadurch eine Spannvorrichtung mit einer langlebigen Faserverbund-Leichtbaufeder geschaffen, die kompakt aufgebaut ist und eine für die Erzeugung der Spannkräfte optimale Federkennlinie enthält. Die Federanordnung ist außerdem einfach herstellbar und kann auch ohne großen Aufwand montiert werden. Ferner ist eine solche Federanordnung unempfindlich gegen Korrosion und weist eine erhöhte Lebensdauer auf.

Die Federanordnung kann zweckmäßigerweise eine oder mehrere mit den Federelementen aus einem Faserverbundwerkstoff versehene Federeinheiten enthalten. Durch eine geeignete Auswahl oder Zusammenstellung mehrerer Federeinheiten können die gewünschten Federeigenschaften auf einfache Weise verändert und an die jeweiligen Anforderungen angepasst werden.

In einer besonders zweckmäßigen Ausführung kann die Federanordnung z.B. als Knickstabfeder mit mehreren in Umfangrichtung voneinander beabstandeten, stabförmigen Federelementen ausgebildet sein.

In einer weiteren vorteilhaften Ausführung können die in Umfangsrichtung voneinander beabstandeten Federelemente unter einem Winkel zu einer Verbindungslinie zwischen dem Mittelpunkt und dem Rand eines Stützrings geneigt angeordnet sein. Durch eine solche Ausrichtung der Federelemente kann sichergestellt werden, dass sich die Federelemente auch im komprimierten Zustand der Federeinheit nicht berühren. Die Federelemente könnten aber auch von der Mitte aus sternförmig entlang der Radien angeordnet sein.

In einer einfach herstellbaren Ausführung sind die vorzugsweise aus GFK oder CFK bestehenden Federelemente als Stäbe mit einem rechteckigen Querschnitt ausgeführt. Es sind aber auch andere Formen von Federelementen möglich. Die Federelemente könnten auch halbkreisförmig gebogene Ringsegmente sein, die an der Außenseite eines Stützrings angeordnet sind.

Die Löseeinheit, durch welche der Spannsatz entgegen der Federanordnung in die Lösestellung bewegbar ist, kann hydraulisch, pneumatisch oder elektrisch betätigt werden. Bei einer elektrischen Betätigung kann auf gesonderte Hydraulik- bzw. Pneumatikaggregate und auch auf aufwändige Dichtungsmaßnahmen verzichtet werden. Der elektrische Antrieb kann ein Motor sein, dessen Stator und Rotor in einem Gehäuse der Löseeinheit untergebracht sind.

Die Erfindung betrifft außerdem eine Bearbeitungseinheit einer Werkzeugmaschine, bei der die vorstehend beschriebene Spannvorrichtung in eine Arbeitsspindel oder ein anderes Maschinenteil integriert ist.

Vorzugsweise handelt es sich bei dem Maschinenteil um eine drehbar gelagerte und durch einen Antrieb drehbare Arbeitsspindel.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Bearbeitungseinheit einer Werkzeugmaschine mit einer Spannvorrichtung in einem Längsschnitt;
- **Figur 2**: eine Federeinheit der in Figur 1 gezeigten Spannvorrichtung in einer Perspektive;
- **Figur 3**: eine Seitenansicht der Federeinheit von Figur 2 in einem nicht komprimierten Zustand und
- **Figur 4**: eine Seitenansicht der Federeinheit von Figur 2 in einem komprimierten Zustand.

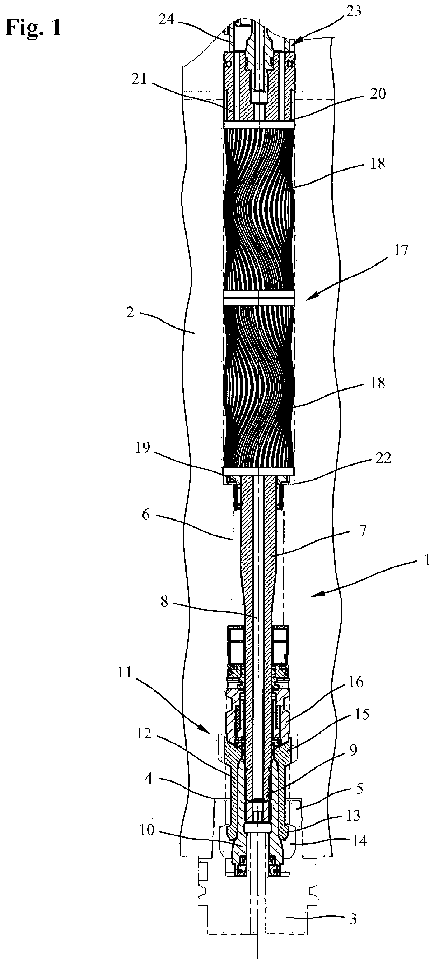

In Figur 1 ist eine Bearbeitungseinheit einer Werkzeugmaschine mit einer in einem Maschinenteil 2 integrierten Spannvorrichtung 1 zum Spannen eines Werkstücks oder Werkzeugs bzw. einer Werkzeugaufnahme 3 schematisch dargestellt. Bei der gezeigten Ausführung ist das nur zum Teil dargestellte Maschinenteil 2 eine innerhalb eines Spindelgehäuses drehbar gelagerte und durch einen Antrieb rotatorisch angetriebene Arbeitsspindel, die an ihrem in Figur 1 unten angeordneten äußeren Ende einen Innenkegel 4 für die Aufnahme eines hier als Hohlschaftkegel ausgebildeten Werkzeugkegels 5 der Werkzeugaufnahme 3 oder eines Fräsers, Bohrers bzw. eines anderen Bearbeitungswerkzeugs enthält. Über die Spannvorrichtung 1 kann auch ein während der Bearbeitung rotierendes Werkstück gespannt werden. Das Maschinenteil 2 kann außerdem auch ein Bearbeitungstisch oder dgl. sein, in dem die Spannvorrichtung 1 zum Spannen eines Werkstücks oder Werkzeugs eingebaut ist.

Die Spannvorrichtung 1 enthält eine innerhalb einer Bohrung 6 des Maschinenteils 2 axial verschiebbare Zugstange 7, die bei der gezeigten Ausführung mit einer Durchgangsbohrung 8 für die Zuführung eines Kühlschmiermittels zur Werkzeugaufnahme 3 bzw. zum Werkzeug versehen ist. An dem zur Werkzeugaufnahme 3 weisenden äußeren Ende 9 der Zugstange 7 ist ein Spannkegel 10 eines an sich bekannten Spannsatzes 11 befestigt ist. Der Spannsatz 11 enthält eine um den Spannkegel 10 angeordnete Spannzange mit mehreren Zangenelementen 12, die durch axiale Verschiebung des Spannkegels 10 zur Klemmung bzw. Freigabe des Werkzeugkegels 5 radial beweglich sind.

Die Zangenelemente 12 des Spannsatzes 11 greifen mit ihren äußeren Enden 13 in eine Ringnut 14 der Werkzeugaufnahme 3 ein. Mit ihren inneren Enden 15 sind die Zangenelemente 12 an einer Stützhülse 16 abgestützt. Die Zugstange 7 wird durch eine um diese konzentrisch angeordnete Federanordnung 17 nach hinten vorgespannt. Die bei der gezeigten Ausführung aus zwei im Folgenden noch näher erläuterten Federeinheiten 18 bestehende Federanordnung 17 ist an der einen Seite an einer innerhalb des Maschinenteils 2 abgestützten Anlagescheibe 19 und an der anderen Seite an einem Bund 20 am verbreiterten hinteren Ende 21 der Zugstange 7 abgestützt. Die Anlagescheibe 19 liegt an einem inneren Ringbund 22 der Bohrung 6 des hier als Arbeitsspindel ausgebildeten Maschinenteils 2 an.

An dem von der Werkzeugaufnahme 3 abgewandten inneren Ende 17 der Zugstange 7 ist eine Löseeinheit 23 angeordnet, durch welche die Zugstange 7 entgegen der Kraft der Federanordnung 17 nach vorne gedrückt werden kann. Die Löseeinheit 23 enthält eine an dem hinteren Ende 21 der Zugstange 7 anliegende Druckhülse 24, die durch einen hydraulischen, pneumatischen oder auch elektrischen Antrieb verschoben werden kann. Wenn die Zugstange 7 mit Hilfe der Löseeinheit 23 in Richtung der Werkzeugaufnahme 3 gedrückt wird, gibt der am vorderen Ende der Arbeitsspindel 6 angeordnete Spannsatz 11 den Werkzeugkegel 5 der Werkzeugaufnahme 3 bzw. Werkzeugs frei. Wird dagegen die Zugstange 7 durch die Kraft der Federanordnung 17 wieder nach hinten gezogen, wird der Werkzeugkegel 5 in das Maschinenteil 2 eingezogen und geklemmt. Der Aufbau und die Funktionsweise des Spannsatzes 11 sind als solche bekannt, so dass hier auf die ausführliche Beschreibung verzichtet werden kann.

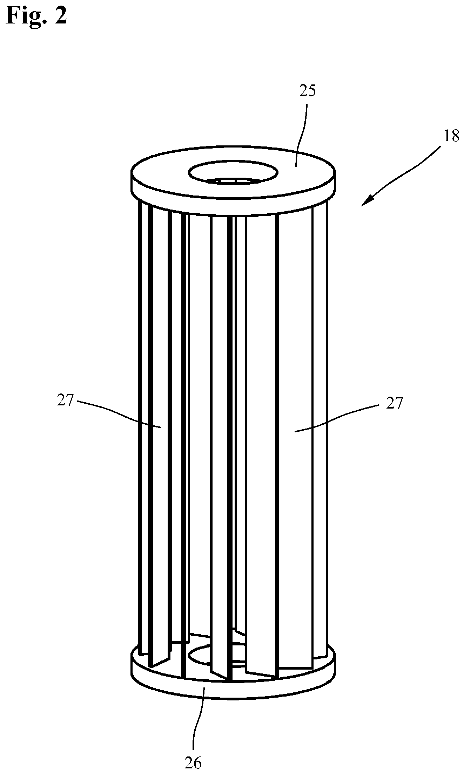

Wie bereits vorstehend erläutert, besteht die Federanordnung 17 aus einer oder mehreren in Reihe angeordneten Federeinheiten 18, die in den Figuren 2 bis 4 in unterschiedlichen Ansichten gesondert dargestellt sind.

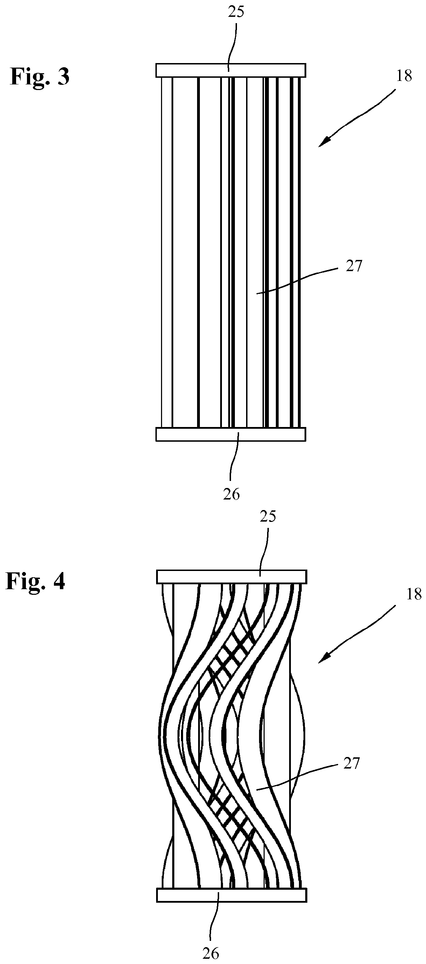

Wie in Figur 2 gezeigt ist, weisen die Federeinheiten 18 mehrere zwischen zwei Stützringen 25 bzw. 26 eingespannte und als Knickstäbe ausgebildete Federelemente 27 auf. Die stabförmigen Federelemente 27 sind aus GFK, CFK oder aus einem anderen Faserverbundwerkstoff hergestellt und weisen einen rechteckigen Querschnitt auf. Wenn die Federeinheit 18 komprimiert wird, knicken die stabförmigen Federelemente 27 gegenüber der in Figur 3 gezeigten Ausgangsstellung ein und werden in der in Figur 4 gezeigten Weise gebogen. Bei der gezeigten Ausführung sind die stabförmigen Federelemente 27 in Umfangsrichtung voneinander beabstandet und unter einem Winkel zu einer Verbindungslinie zwischen dem Mittelpunkt und dem Rand des Stützrings 25 bzw. 26 geneigt angeordnet. Durch eine solche Ausrichtung der Federelemente 27 wird sichergestellt, dass sich die Federelemente 27 auch im komprimierten Zustand der Federeinheit 18 nicht berühren.

Die Funktionsweise der vorstehend beschriebenen Spannvorrichtung wird im Folgenden anhand der Figur 1 erläutert.

In der in Figur 1 gezeigten Lösestellung der Spannvorrichtung wird die Zugstange 7 über die z.B. hydraulisch, pneumatisch oder elektrisch betätigte Löseeinheit 23 entgegen der Kraft der Federanordnung 17 in Richtung der Werkzeugaufnahme 3 gedrückt. Dabei werden die beiden Federelemente 18 entsprechend der Figur 4 komprimiert und die Zangenelemente 12 des Spannsatzes 11 können über den Spannkegel 10 und die Stützhülse 16 die in Figur 1 gezeigte, radial nach innen gedrückte Lösestellung einnehmen. In dieser Lösestellung sind die äußeren Enden 13 der Zangenelemente 12 außer Eingriff mit der Ringnut 14 in der Werkzeugaufnahme 3 und die Zangenelemente 12 geben die Werkzeugaufnahme 3 zum Werkzeugwechsel frei.

Wird dagegen die Druckhülse 24 der Löseeinheit 23 zurückgezogen, wird die Zugstange 7 durch die Federanordnung 17 eingezogen, wodurch die Zangenelemente 12 über den Spannkegel 10 radial nach außen gedrückt werden und der Werkzeugkegel 5 der Werkzeugaufnahme 3 über die Zangenelemente 12 in den Innenkegel 4 des Maschinenteils 2 eingezogen und gespannt wird.

Die erfindungsgemäße Spannvorrichtung ist nicht auf die vorstehend beschriebenen Ausführungsbeispiele beschränkt. So kann das erfindungsgemäße Spannsystem nicht nur bei Hohlkegelspannsystemen, sondern auch bei Steilkegelspannsystemen zum Einsatz gelangen. Der Spannsatz kann sowohl zur Halterung von Werkzeugen mit Hohlschaftkegel (HSK) als auch Halterung von Werkzeugen mit Steilkegel (SK) in Art einer Spannzange oder dgl. ausgeführt sein. Die Spannvorrichtung ist auch für die lösbare Halterung von Werkstücken geeignet. Außerdem können unterschiedliche Antriebe zur Betätigung der Löseeinheit zum Einsatz gelangen.

## Patentansprüche

1. Spannvorrichtung (1) zum Spannen eines Werkstücks oder eines Werkzeugs bzw. einer Werkzeugaufnahme (3) an einem Maschinenteil (2) einer Werkzeugmaschine, mit einer axial verschiebbaren Zugstange (7), einem über die Zugstange (7) zwischen einer Spannstellung und einer Lösestellung bewegbaren Spannsatz (11), einer der Zugstange (7) zugeordneten Federanordnung (17) zur Erzeugung der Spann- bzw. Einzugskraft des Spannsatzes (11) und einer Löseeinheit (23), durch welche der Spannsatz (11) über die Zugstange (7) entgegen der Kraft der Federanordnung (17) in die Lösestellung bewegbar ist, **dadurch gekennzeichnet, dass** die Federanordnung (17) mehrere aus einem Faserverbundwerkstoff bestehende Federelemente (27) enthält.

2. Spannvorrichtung nach Anspruch 1, **dadurch gekennzeichnet, dass** die Federanordnung (17) eine oder mehrere mit den Federelementen (27) aus einem Faserverbundwerkstoff versehene Federeinheiten (18) enthält.

3. Spannvorrichtung nach Anspruch 1 oder 2, **dadurch gekennzeichnet, dass** die Federanordnung (17) als Knickstabfeder mit mehreren in Umfangrichtung voneinander beabstandeten, stabförmigen Federelementen (27) ausgebildet ist.

4. Spannvorrichtung nach einem der Ansprüche 1 bis 3, **dadurch gekennzeichnet, dass** die Federelemente (27) zwischen zwei voneinander beabstandeten Stützringen (25, 26) eingespannt sind.

5. Spannvorrichtung nach Anspruch 4, **dadurch gekennzeichnet, dass** die einzelnen Federelemente (27) unter einem Winkel zu einer Verbindungslinie zwischen dem Mittelpunkt und dem Rand eines Stützrings (25, 26) geneigt angeordnet sind.

6. Spannvorrichtung nach einem der Ansprüche 1 bis 5, **dadurch gekennzeichnet, dass** die Federelemente (27) einen rechteckigen Querschnitt aufweisen.

7. Spannvorrichtung nach einem der Ansprüche 1 bis 6, **dadurch gekennzeichnet, dass** die Federelemente (27) aus GFK oder CFK bestehen.

8. Spannvorrichtung nach einem der Ansprüche 1 bis 7, **dadurch gekennzeichnet, dass** die Löseeinheit (23) hydraulisch, pneumatisch oder elektrisch betätigbar ist.

9. Bearbeitungseinheit einer Werkzeugmaschine mit einer in einem Maschinenteil (2) integrierten Spannvorrichtung (1), **dadurch gekennzeichnet, dass** die Spannvorrichtung nach einem der Ansprüche 1 bis 8 ausgebildet ist.

10. Bearbeitungseinheit nach Anspruch 9, **dadurch gekennzeichnet, dass** das Maschinenteil (2) eine drehbar gelagerte und durch einen Antrieb drehbare Arbeitsspindel ist.

## Claims

1. Clamping device (1) for clamping a workpiece or a tool or a tool holder (3) on a machine part (2) of a machine tool, having an axially displaceable pull rod (7), a clamping set (11) movable by means of the pull rod (7) between a clamping position and a release position, a spring assembly (17) associated with the pull rod (7) for generating the clamping or insertion force of the clamping set (11) and a release unit (23) by which the clamping set (11) is movable by means of the pull rod (7) into the release position against the force of the spring assembly (17), **characterised in that** the spring assembly (17) contains a plurality of spring elements (27) made of a fibre composite material.

2. Clamping device according to claim 1, **characterised in that** the spring assembly (17) contains one or more spring units (18) provided with the spring elements (27) made of a fibre composite material.

3. Clamping device according to claim 1 or 2, **characterised in that** the spring assembly (17) is designed as a buckling-pin spring having a plurality of rod-like spring elements (27) spaced apart from each other in the circumferential direction.

4. Clamping device according to one of claims 1 to 3, **characterised in that** the spring elements (27) are clamped between two spaced-apart supporting rings (25, 26).

5. Clamping device according to claim 4, **characterised in that** the individual spring elements (27) are arranged at an angle to a connecting line between the centre and the edge of a supporting ring (25, 26).

6. Clamping device according to one of claims 1 to 5, **characterised in that** the spring elements (27) have a rectangular cross-section.

7. Clamping device according to one of claims 1 to 6, **characterised in that** the spring elements (27) are made of glass fibre-reinforced plastic or carbon fibre-reinforced plastic.

8. Clamping device according to one of claims 1 to 7, **characterised in that** the release unit (23) is operable hydraulically, pneumatically or electrically.

9. Machining unit of a machine tool with a clamping device (1) integrated in a machine part (2), **characterised in that** the clamping device is designed according to one of claims 1 to 8.

10. Machining unit according to claim 9, **characterised in that** the machine part (2) is a working spindle mounted rotatably and rotatable by a drive.

## Revendications

1. Dispositif de serrage (1) servant à serrer une pièce ou un outil ou un porte-outil (3) au niveau d'une partie de machine (2) d'une machine-outil, avec une tige de traction (7) pouvant être coulissée de manière axiale, un set de serrage (11) pouvant être déplacé par l'intermédiaire de la tige de traction (7) entre une position de serrage et une position de desserrage, un ensemble de ressorts (17) associé à la tige de traction (7) servant à produire la force de serrage ou la force de traction du set de serrage (11) et une unité de desserrage (23), par laquelle le set de serrage (11) peut être déplacé dans la position de desserrage par l'intermédiaire de la tige de traction (7) à l'encontre de la force de l'ensemble de ressorts (17), **caractérisé en ce que** l'ensemble de ressorts (17) contient plusieurs éléments de ressort (27) constitués par un matériau composite à base de fibres.

2. Dispositif de serrage selon la revendication 1, **caractérisé en ce que** l'ensemble de ressorts (17) contient une ou plusieurs unités de ressort (18) pourvues des éléments de ressort (27) composés d'un matériau composite à base de fibres.

3. Dispositif de serrage selon la revendication 1 ou 2, **caractérisé en ce que** l'ensemble de ressorts (17) est réalisé sous la forme d'un ressort en barre de flambage avec plusieurs éléments de ressort (27) en forme de barre espacés les uns des autres dans la direction périphérique.

4. Dispositif de serrage selon l'une quelconque des revendications 1 à 3, **caractérisé en ce que** les éléments de ressort (27) sont enserrés entre deux bagues de soutien (25, 26) espacées l'une de l'autre.

5. Dispositif de serrage selon la revendication 4, **caractérisé en ce que** les divers éléments de ressort (27) sont disposés de manière inclinée selon un angle par rapport à une ligne de liaison entre le point central et le bord d'une bague de soutien (25, 26).

6. Dispositif de serrage selon l'une quelconque des revendications 1 à 5, **caractérisé en ce que** les éléments de ressort (27) présentent une section transversale rectangulaire.

7. Dispositif de serrage selon l'une quelconque des revendications 1 à 6, **caractérisé en ce que** les éléments de ressort (27) sont constitués par du plastique renforcé par des fibres de verre (GFK) ou par du plastique renforcé par des fibres de carbone (CFK).

8. Dispositif de serrage selon l'une quelconque des revendications 1 à 7, **caractérisé en ce que** l'unité de desserrage (23) peut être actionnée de manière hydraulique, pneumatique ou électrique.

9. Unité d'usinage d'une machine-outil avec un dispositif de serrage (1) intégré dans une partie de machine (2), **caractérisée en ce que** le dispositif de serrage est réalisé selon l'une quelconque des revendications 1 à 8.

10. Unité d'usinage selon la revendication 9, **caractérisée en ce que** la partie de machine (2) est une broche de travail montée de manière à pouvoir tourner et pouvant être tournée par un entraînement.
